# EUROPEAN PATENT SPECIFICATION

(11) **EP 1 942 616 B1**
(45) Date of publication and mention of the grant of the patent: **25.06.2014**
(21) Application number: 07290009.5
(22) Date of filing: 03.01.2007
(51) Int. Cl.: H04L 12/759, H04L 12/26, H04L 12/24, H04L 12/751, H04L 12/717

(54) **Method of establishing a path in a data network, network elements and data network**
Verfahren zur Festlegung eines Pfades in einem Datennetz, Netzelemente und Datennetz
Méthode pour l'établissement d'un chemin dans un réseau de données, élément de réseau et réseau de données

(43) Date of publication of application: 09.07.2008
(73) Proprietor: Alcatel Lucent, 75007 Paris (FR)
(72) Inventor: Dotaro, Emmanuel, 91370 Verrieres le Buisson (FR); Douville, Richard, 91310 Longpont sur Orge (FR)
(74) Representative: Wetzel, Emmanuelle

(56) References cited:
- US-B1- 7 152 179
- FARREL OLD DOG CONSULTING J-P VASSEUR CISCO SYSTEMS A ET AL: "A Path Computation Element (PCE)-Based Architecture" IETF STANDARD, INTERNET ENGINEERING TASK FORCE, IETF, CH, August 2006 (2006-08), XP015047407 ISSN: 0000-0003
- JI P ET AL: "A COMPARISON OF HARD-STATE AND SOFT-STATE SIGNALING PROTOCOLS" COMPUTER COMMUNICATION REVIEW, ACM, NEW YORK, NY, US, vol. 33, no. 4, October 2003 (2003-10), pages 251-262, XP001224085 ISSN: 0146-4833

## Description

### Background of the invention

The present invention relates to a method of establishing a network path between nodes in a data network involving computing said network path from link state information comprised in a traffic engineering database, wherein said traffic engineering database stores first link state information provided on a regular basis in accordance with a routing protocol used by said data network.

The present invention also relates to a network element for use in a data network, and to a corresponding data network.

In known data networks, such as Multiprotocol Label Switching (MLPS) networks or Generalised Multiprotocol Label Switching (GLMPS) networks, a Path Computation Element (PCE) as disclosed, e.g., in Request for Comments 4655 (RFC 4655; hftp://tools.itf.org/rfc/rfc4655.txt) computes a network path between entities in the network (e.g., a Traffic Engineered Label Switched Path - TE-LSP) by using at least one Traffic Engineering Database (TED) which is fed on a regular basis by extensions to an internal gateway protocol (IGP) - for instance, the standard OSPF-TE flooding mechanism, when OSPF - Open Shortest Path First is used as routing protocol.

In this way, information about link states in the data network are known to all PCE entities only after a convergence delay due to an update refresh time of the routing protocol used. Said update refresh time is generally fixed by a network operator, and is of the order of 30 minutes in the case of standard OSPF.

This approach suffers from the inherent disadvantage that in case of link failure or other critical state modification there is no corresponding modification of the TDE, and the PCEs may therefore compute a bad network path by using an incriminated link. In this case, a signalling protocol or any other protocol mechanism, e.g. Resource reservation Protocol (RSVP) used to establish network resources along the path must fail, thus resulting in deteriorated network performance.

A prior art patent document illustrating the above-described state of the art is US 6,985,959 B1. Said document discloses a data network comprising so-called TE-X elements (traffic engineering route exchange routers) which embody at least some PCE functionality as defined in the above-referenced document RFC 4655. Network path calculation is performed based on so-called TE-LSAs (Link State Advertisements) which are sent to an associated TE-X by respective nodes, i.e., OSPF routers in the network. Based on the received TE-LSAs, TE-Xes maintain respective TE-LSDes (Link State Databases) for path computation. As further described in said document US 6,985,959 B1, the TE-LSAs are issued regularly at predetermined update refresh times of the OSPF protocol. In this way, link state information in the TE-Xes is known only after a certain time (convergence time) due to the nature of the used protocol (OSPF).

As already mentioned above, the update refresh time is configurable according to the choice of an operator. However, due to scalability problems, routing loop problems and other considerations, currently the applied refresh time varies within a time window of several minutes, the above-mentioned value of 30 minutes being widely accepted.

The article "A comparison of Hard-state and Soft-state Signalling Protocols" by Ping Ji et al., Computer Communication Review, ACM, New York, vol. 33, no. 4, Oct. 2003, pp. 251-262, describes a soft-state signalling approach in which an installed state "times out" (and is removed) unless periodically "refreshed" by the receipt of a signalling message indicating that the state should continue to remain installed. In a modified Soft-state protocol, an explicit state-removal message which carries explicit state-removal information is used.

US 7,152,179 B1 discloses a redundant gateway apparatus having a monitoring unit for monitoring gateway ports to detect failure of an active gateway device. When a failure of the active gateway device is detected, the monitoring unit sends a notice to a standby gateway device.

### Object of the invention

It is the object of the present invention to provide a method of establishing a network path of the above-defined type which does not present the above-mentioned inherent disadvantages and achieves improved network performance. It is also an object of the present invention to provide a network element and a data network which can be used to translate the inventive method into practice.

### Summary of the invention

According to a first aspect of the present invention the object is achieved by providing a method of the above-defined type, said method further comprising providing a number of path computing elements of said data network, which are used for computing said network path, with second link state information sent between peers of nodes in the data network on an ad-hoc basis, and using said first and second link state information for computing said network path to be established, and by providing said second link state information in the form of link state notify messages being being Resource reSerVation Protocol-Traffic Engineering, RSVP-TE, messages or Path Computation Element Communication Protocol, PCEP, messages, said link state notify messages being sent from a node detecting critical state modification of said network to a registered node designated to receive said link state notify messages for notification of said critical state modification, comprising sending a copy of said messages to said path computing entities for updating the traffic engineering database.

According to a second aspect of the present invention the object is also achieved by providing a network element for use in a data network including a switched network path between at least a respective ingress network element and a respective egress network element, said network element comprising at least one path computing element, PCE, comprising:
- means for receiving first link state information from entities of the data network on a regular basis;
- means for storing said first link state information in a traffic engineering database;
- means for computing a network path based on said first link state information;
- means for receiving second link state information from entities of the data network on an ad-hoc basis, wherein said means for computing a network path are adapted to compute said network path by including said second link state information
the network element further comprising:
- means for generating a notify message being a Resource reSerVation Protocol-Traffic Engineering, RSVP-TE, message or a Path Computation Element Communication Protocol, PCEP, message to inform at least a registered network element designated to receive said link state notify message in case of a network event, in particular a detected network element failure, a usage ratio of network resources based on threshold detection, and/or a detected link failure;
- means for sending a copy of said notify message to said at least one PCE for updating the traffic engineering database.

According to a fourth aspect of the present invention the object is achieved by providing a data network, said data network comprising at least two network elements according to said second aspect of the present invention.

In this way, in accordance with a general idea underlying the present invention, regular link state information stored inside the TED or the TEDs of the PCE or the PCEs in the data network, e.g., standard OSPF-TE network information, is completed by other pertinent fresher information of critical network modification (e.g., link state failure), which is provided on an ad-hoc basis, i.e., whenever a corresponding link event occurs. Throughout the present document the term "link event" or "network event" refers to either a failed link establishment (link failure) or a network path congestion or a similar event in the network, e.g. a network element or node failure. In this way, the above-mentioned disadvantages introduced by the rather long IGP convergence delay can be overcome. With the proposed solution, the blocking ratio of path establishment as well as network instability may be reduced drastically.

Said second link state information is used for updating the traffic engineering database or traffic engineering databases in the case of a plurality of PCEs. In this way, path computation can be carried out based on TEDs which comprise the latest available link state information independent from regular TED update refresh time. A corresponding network element in accordance with the present invention comprises means for storing said second link state information in said traffic engineering database, TED.

Advantageously, the present invention makes use of link state information already available within the data network which - according to the prior art - has not been used for traffic engineering purposes.

In order to further improve the link state information contents of the TEDs, according to yet another embodiment of the method in accordance with the present invention the latter comprises sending said second link state information in case of a network event, in particular a detected network element failure, a usage ratio of network resources based on threshold detection, and/or in case of a detected link failure. Advantageously, said second link state information are sent immediately after the occurrence of a pertinent link event.

Alternatively or additionally, the TEDs can also be updated by sending second link state information in case of a particular link reaching a respective predefined filling capacity.

Further advantages and characteristics of the present invention can be gathered from the following description of preferred embodiments given by way of example only with reference to the enclosed drawings. Features mentioned above as well as below can be used in accordance with the present invention either individually or in conjunction. The following description of embodiments is not to be regarded as an exhaustive enumeration but rather as examples with respect to a general concept underlying the present invention.

### Brief description of the drawings

- Fig. 1: is a schematic diagram of a data network in accordance with the present invention and employing an embodiment of the method in accordance with the present invention;
- Fig. 2: is a detailed schematic diagram of a Path Computing Element (PCE) in accordance with the present invention and comprised in the data network of Fig. 1;
- Fig. 3: is a schematic block diagram of a network element in Fig. 1 in accordance with the present invention; and
- Fig. 4: is a flow chart for illustrating an embodiment of the method in accordance with the present invention.

### Detailed description

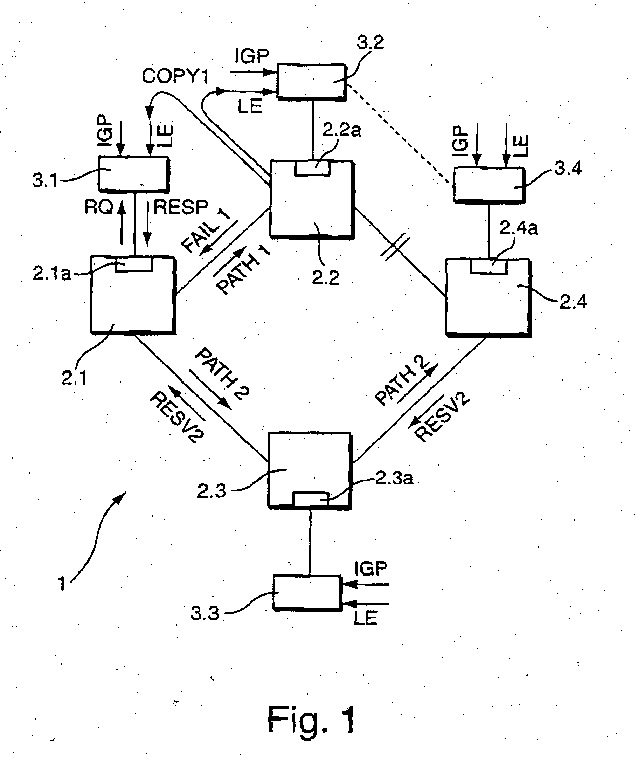

**Fig. 1** shows a schematic diagram of a data network in accordance with the present invention and employing an embodiment of the method in accordance with the present invention. The data network of Fig, 1 comprises a number of nodes or network elements **2.1** - **2.4** (e.g., routers) equipped with respective PCC functions **2.1a** - **2.4a** having associated Path Computation Elements (PCEs) **3.1** - **3.4**, respectively. In accordance with Request for Comments 4655 (RFC 4655), a PCE is an entity (i.e., a component, application, or network node) that is capable of computing a network path or route based on a network graph and applying computational constraints, as explained in detail in Section 3 of said RFC document.

In the exemplary embodiment of Fig. 1, a network architecture having multiple PCEs has been depicted. It will be appreciated by a person skilled in the art, the present invention is by no means limited to such an architecture, Various other PCE architectures can be devised, as explained in detail in Section 5 of RFC 4655, the contents of which is herewith included by reference in the present application.

While in Fig. 1 each one of nodes 2.1 - 2.4 is equipped with a respective PCC function 2.1 a - 2.4a, this is not necessarily the case, and the present invention also encompasses such architectures.

In the context of the present invention data network 1 can be identified with a data network operated in accordance with the principles of Multiprotocol Label Switching (MPLS) networks or Generalised Multiprotocol Label Switching (GMPLS) networks in which network paths are set up as Label Switched Paths (LSPs) by means of an appropriate signalling protocol, as known to a person skilled in the art. A commonly known protocol which is appropriate in the context of the present invention is OSPF (Open Shortest Path First). OSPF uses a Link State Database (LSB) or Traffic Engineering Database (TED) for routing purposes, wherein said database comprises information which reflect network topology. In the exemplary embodiment of Fig. 1 each PCE comprises a TED for path computing purposes.

Building said database and updating it in case of topology changes requires an exchange of routing information between elements of the data network 1. In accordance with OSPF, which in general way can be referred to as Interior Gateway Protocol (IGP), said routing information are provided through flooding which occurs regularly based on an incompressible time interval in accordance with the IGP used (e.g., OSPF).

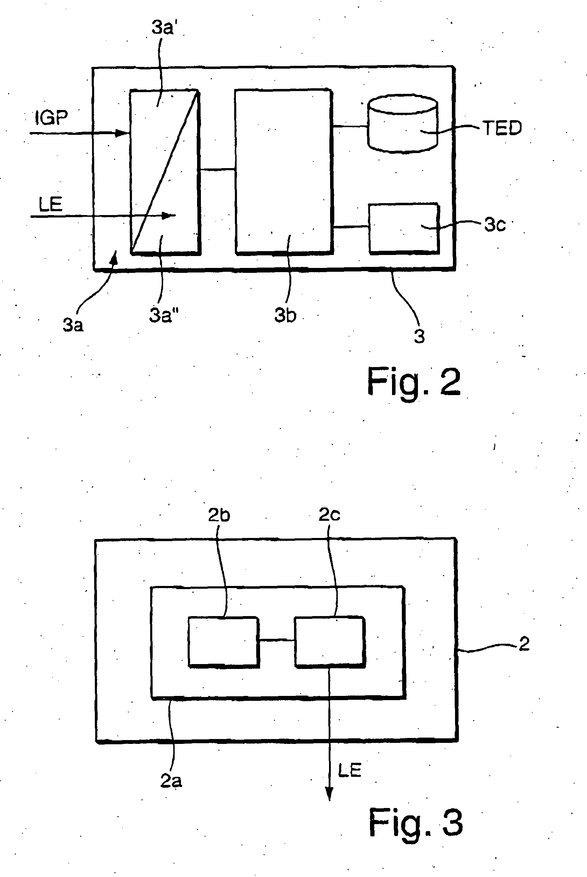

In the data network 1 of Fig. 1, path computation is performed by PCEs 3.1 - 3.4 which also comprise said Traffic Engineering Database (TED), as will be explained in detail below with reference to appended Fig. 2. For path setup and resource reservation, network nodes or elements 2.1 - 2.4 of Fig. 1, which are generally devised as routers, comprise respective signalling engines (not shown in Fig. 1), as will be explained in detail below with reference to appended Fig. 3.

**Fig. 2** shows a detailed schematic diagram of a Path Computing Element (PCE) in accordance with the present invention and comprised in the data network of Fig. 1. In Fig. 2, the PCE has been assigned reference numeral **3**. PCE 3 comprises means **3a** for receiving a first type of link state information from entities, i.e., network elements 2.1 - 2.4 (Fig. 1) of the data network 1 on a regular basis. PCE 3 of Fig. 2 further comprises means 3b for storing said first type of link state information (or first link state information) in a Traffic Engineering Database (TED) comprised in the PCE 3. Furthermore, PCE 3 comprises means 3c for computing a network path based on said first link state information stored in the TED.

While the above-mentioned elements constitute standard PCE architecture, PCE 3 further comprises means for receiving a second type of link state information (or second link state information) from entities of the data network 1 (e.g., network elements 2.1 - 2.4). Said second link state information are provided on an ad-hoc basis as contrasted to said regular basis for providing said first link state information. In the context of the present document "ad-hoc basis" signifies that the second link state information are provided to the PCE 3 whenever a topology modifying link event occurs, i.e., a link failure or a node failure, as will be explained in more detail below. On the other hand, said first link state information is provided on a regular basis, e.g., through standard OSPF flooding mechanisms, as already mentioned above. In Fig. 2, said means 3a for receiving said first link state information are also adapted for receiving said second link state information, as illustrated by means of first and second parts **3a', 3a"** included within receiving means 3a. In accordance with the above description, said first link state information are generally denoted as IGP, while said second link state information are denoted LE (for Link Event).

In accordance with the present invention, said means 3c for computing a path through said data network 1 (fig. 1) are adapted to compute said network path by including said second link state information. In other words, PCE 3 does not only rely on link state information which is provided on a regular non-compressible time basis in accordance with the IGP, and which is stored on TED, but also uses additional information LE, which is provided to the PCE (and stored therein to update the TED) whenever a link event occurs. This general concept of the present invention will be explained in more detail below with reference to appended Figs. 1, 2, and 3.

**Fig. 3** shows a schematic block diagram of a network element in Fig. 1 in accordance with the present invention. As already mentioned above, network elements 2.1 - 2.4, here generally depicted as network element 2, comprise signalling engine 2a including first means **2b** and second means **2c.** Said first means 2b are devised for generating a notify message to inform a further element of data network 1 (Fig. 1) in case of a particular link reaching a respective predefined filling capacity in said data network and/or in case of a detected link failure in said data network 1. As will be appreciated by a person skilled in the art, the above-mentioned functionality of said first means 2b corresponds to a functionality of standard Resource reSerVation Protocol-Traffic Engineering (RSVP-TE), which is one of the most important signalling protocols in the internet protocol stack.

As further known to a person skilled in the art, RSVP includes sending a special message from a sender in a data network to a receiver, said special message being called an RSVP Path Message. Said type of message is employed for detecting a possible path from the sender to the receiver. Passed routers are protocolled and notified to the receiver. Along said path, the receiver sends a further message called RSVP Reservation Message. Routers along the path reserve resources according to the specification comprised in said RSVP Reservation Message or send back an error message. If the RSVP Reservation Message reaches the sender, the latter may rely on said reservations and transmits according to specification.

In accordance with the present invention, network element 2 of Fig. 3 comprises said second means 2c which are devised for sending a copy of said notify message, e.g., an RSVP fail or reservation message, to at least one path computing element (PCE) 3 (Fig. 2); 3.1 - 3.4 (Fig. 1). In other words, said message copy, which is produced and sent in connection with a given link event (e.g., a link failure), can be identified with said second link state information (ad-hoc information), as previously described with reference to appended Fig. 2.

Operation of the data network 1 of Fig. 1 will now be explained with reference to appended Figs. 1 to 3. As depicted in Fig. 1, network element or network node 2.1, which can therefore also be referred to as ingress node, requires the setup of a connection to the node 2.4, which can therefore also be referred to as egress node. To this end, by means of its PCC function 2.1 a, node 2.1 sends a corresponding request **RQ** to PCE 3.1 for path calculation purposes. PCE 3.1 returns a corresponding response **RESP** which comprises a path computation based on link state information stored in the TED, This has already been described in detail above with reference to appended Fig. 2.. By means of its signalling engine 2a (Fig, 2) node 2.1 then issues an RSVP path message **PATH1** according to the computed path included in the RESP message to network element or network node 2.2 for to establish a network path between node 2.1 and node 2.4, e.g., in the form of a Label Switch Path (LSP).

In accordance with the path computation algorithm employed by path computing means 3c in PCE 3.1 (Fig. 2), node 2.1 may try to establish the required network path to node 2.4 directly via network element or network node 2.2. However, as illustrated in Fig. 1, a link failure has occurred between nodes 2.2 and 2.4, Therefore, by means of its signalling engine 2a (Fig. 3) node 2.2 immediately notifies the corresponding node, i.e. node 2,1 about said link failure by generating and transmitting a corresponding RSVP notify message **FAIL1** including the failure reasons. Furthermore, in accordance with the present invention a copy **COPY1** of said notify message FAIL1 is also transmitted to at least some of the PCEs 3.1, 3.2 comprised in data network 1 (Fig. 1) for updating the respective TEDs (Fig. 2). In this way, link state information available within data network 1 is used in addition to regular IGP flooding mechanisms for updating the TEDs immediately after a link event (e.g., a link failure) has been detected within data network 1. This example is also applicable in the case of network node failure. The node that detects a failed node during the LSP establishment transmits the same type of messages but including a different failure reason,

As will be appreciated by a person skilled in the art, the PCEs 3.1 - 3.4 within data network 1 may then relay said message copy COPY1 among themselves to update the TEDs. In Fig. 1, this is illustrated in exemplary fashion by a dashed line between PCE 3.2 and PCE 3.4.

Fig. 1 illustrates a further case, in which ingress node 2.1 attempts to establish the required network path to egress node 2.4 via network element or network node 2.3. To this end, node 2.1 sends an RSVP path message **PATH2** which is relayed by node 2.3 to node 2.4. Since there is no link failure on this network path, the required network path from node 2.1 to node 2.4 can be successfully established, and egress node 2.4 sends back an RSVP resource reservation message **RESV2** via node 2.3 to ingress node 2.1. Due to this reservation message the link filling ratio between the nodes 2.3 and 2.4 reaches a predefined threshold so that node 2.3 generates a new notify message (cf. Fig. 3) and sends it to at least one PCE 3.3 within data network 1. In this way, in addition to regular IGP link state information the TEDs are further updated on an ad-hoc basis in case of a (filling ratio) link event, as previously described in connection with a link failure,

As previously described, a copy of said notify message (not shown) may then be sent to other PCEs in the data network 1.

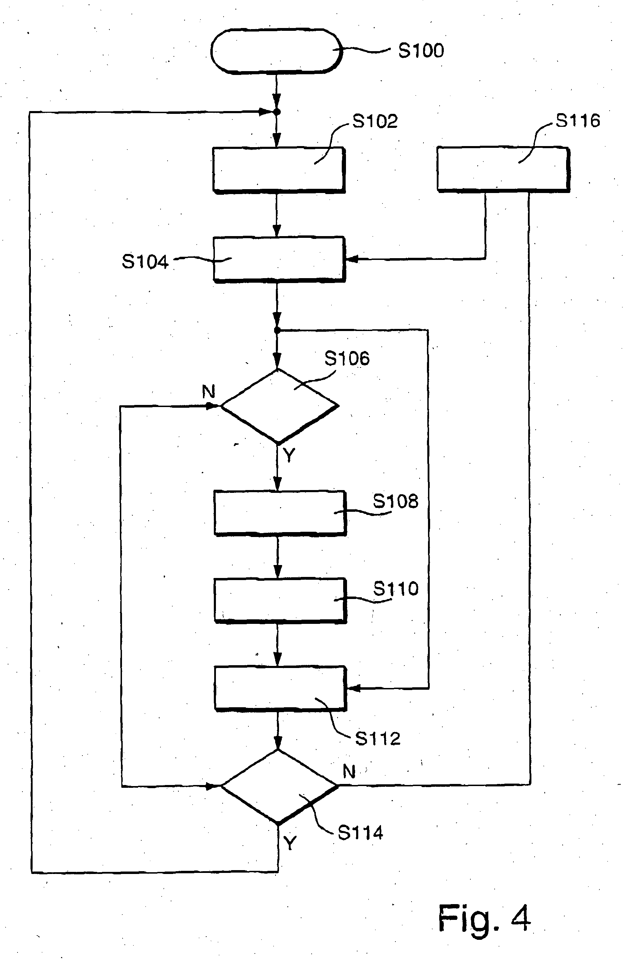

**Fig. 4** shows a flow chart for illustrating an embodiment of the method in accordance with the present invention. The embodiments of the method in accordance with the present invention as depicted in Fig. 4 starts with step **S100.** In subsequent step **S102** link state information (first link state information) is received on a regular basis as governed by the employed routing protocol (e.g. OSPF). Then, in step **S104** the TEDs are updated according to said first link state information (OSPF flooding mechanism).

In subsequent step **S106**, a check is performed as to whether or not a link event has occurred, i.e., whether corresponding notify messages have to be generated which indicate link failure or a filling ratio link event. If the question in Step S106 is answered in the affirmative (y), then a corresponding notify message, e.g., an RSVP message, is generated in subsequent step **S108.** Furthermore, in subsequent step **S110** a copy of said message is generated and sent to a number of PCEs, as previously described, in order to update the respective TEDs (step **S112**).

Then, in step **S114** a check is performed whether or not a time interval used for flooding the PCEs with said first link state information has elapsed. Said time interval can be chosen by a network operator and is generally of the order of 30 minutes. If the question in step S114 is answered in the affirmative (y), then the method continues with above-described step S102, On the other hand, if the question in step S114 is answered in the negative (n) then the method is continued with above-described step S106.

If the question in step S106, as previously described, is answered in the negative (n), then steps S108 - S112 are skipped, and the method continues with step S114, as previously described.

In addition to the above-mentioned method steps S100 - S114 the flow chart of Fig. 4 also shows the operational step of path request / computation (step **S116**). As illustrated in Fig. 4 and previously described with reference to appended Figs. 1 to 3, network path computation in accordance with step S116 is performed by the PCEs using the most recent version of the TED, i.e., either the TED as updated in step S104 (in case no link event has occurred) or as updated in step S112 (in case of one or several link events). In Fig. 4 this is illustrated by means of respective arrows from S116 to S104 and S112, respectively.

As will be appreciated by a person skilled in the art, the notify messages used for updating the TEDs can advantageously be sent immediately after link event detection, and the PCEs can receive the associated (second) link state information within a few milliseconds in the best case. This time scale must be compared to the above-mentioned time scale for updating the TEDs based on regular (first) link state information.

As will further be appreciated by a person skilled in the art, the present invention is not necessarily limited to using the OSPF routing protocol: any other future standard protocol which is able to gather network information for the PCEs can be employed instead. Furthermore, the present invention is not limited to the use of existing RSVP messages for notifying the PCEs. As an alternative, Path Computation Element (PCE) Communication Protocol (PCEP) could be employed (as disclosed, e.g., at http://www.ietf.org/internet-drafts/draft-ietf-pce-pcep-02.txt). In this case, however, a PCC should exist on the node that wishes to advertise.

## Claims

1. A method of establishing a network path between nodes (2.1 - 2.4) in a data network (1) involving computing said network path from link state information comprised in a traffic engineering database (TED), wherein said traffic engineering database stores first link state information provided on a regular basis in accordance with a routing protocol used by said data network, **characterised by** providing a number of path computing elements (3.1 - 3.4) of said data network, which are used for computing said network path, with second link state information sent between peers of nodes (2.1 - 2.4) in the data network on an ad-hoc basis, by using said first and second link state information for computing said network path to be established, and by providing said second link state information in the form of link state notify messages (FAIL1) being Resource reSerVation Protocol-Traffic Engineering, RSVP-TE, messages or Path Computation Element Communication Protocol, PCEP, messages, said link state notify messages (FAIL1) being sent from a node detecting critical state modification (2.2) of said network to a registered node (2.1) designated to receive said link state notify messages (FAIL1) for notification of said critical state modification (2.2), comprising sending a copy (COPY1) of said messages to said path computing entities (3.1 - 3.4) for updating the traffic engineering database (TED).

2. The method of claim 1, **characterised in that** said routing protocol is an Open Shortest Path First, OSPF, routing protocol.

3. The method of claim 1, **characterised by** sending said second link state information in case of a network event, in particular a detected network element failure, a usage ratio of network resources based on threshold detection, and/or in case of a detected link failure.

4. The method of claim 1, **characterised by** sending said second link state information in case of a particular link reaching a respective predefined filling capacity.

5. Network element (2.1 - 2.4) for use in a data network (1) including a switched network path between at least a respective ingress network element (2.1) and a respective egress network element (2.3), the network element (2.1 - 2.4) comprising at least one path computing element (3.1 - 3.4), PCE, comprising:
- means (3a; 3a') for receiving first link state information from entities (2.1 - 2.4) of the data network (1) on a regular basis;
- means (3b) for storing said first link state information in a traffic engineering database (TED);
- means (3c) for computing a network path based on said first link state information; and
- means (3a; 3a") for receiving second link state information from entities (2.1 - 2.4; 3.1 - 3.4) of the data network (1) on an ad-hoc basis, wherein said means (3c) for computing a network path are adapted to compute said network path by including said second link state information;
said network element (2.1 - 2.4) further comprising:
- means (2b) for generating a notify message (FAIL1) being a Resource reSerVation Protocol-Traffic Engineering, RSVP-TE, message or a Path Computation Element Communication Protocol, PCEP, message to inform at least a registered network element (2.1) designated to receive said notify message (FAIL1) in case of a network event, in particular a detected network element failure, a usage ratio of network resources based on threshold detection, and/or a detected link failure;
- means (2c) for sending a copy (COPY1) of said notify message to said at least one PCE for updating the traffic engineering database (TED).

6. Data network (1) comprising at least two network elements (2.1 - 2.4) according to claim 5.

## Patentansprüche

1. Verfahren zum Aufbau eines Netzwerkpfads zwischen Knoten (2.1 - 2.4) in einem Datennetzwerk (1), umfassend das Berechnen des besagten Netzwerkpfads aus in einer verkehrstechnischen Datenbank (TED) enthaltenen Verbindungszustandsinformationen, wobei die besagte verkehrstechnische Datenbank gemäß einem von dem Datennetzwerk verwendeten Routing-Protokoll regelmäßig bereitgestellte erste Verbindungszustandsinformationen speichert, **gekennzeichnet durch** das Bereitstellen einer Anzahl von Pfadberechnungselementen (3.1 - 3.4) des besagten Datennetzwerks, welche für die Berechnung des besagten Netzwerkpfads verwendet werden, wobei zweite Verbindungszustandsinformationen auf einer Ad-hoc-Basis zwischen Peers von Knoten (2.1 - 2.4) in dem Datennetzwerk gesendet werden, **durch** Verwenden der besagten ersten und zweiten Verbindungszustandsinformationen für die Berechnung des besagten aufzubauenden Netzwerkpfads, und **durch** Bereitstellen der besagten zweiten Verbindungszustandsinformationen in der Form von Verbindungszustands-Benachrichtigungsmeldungen (FAIL1), welche verkehrstechnische Ressourcenreservierungsprotokoll- bzw. RSVP-TE-Nachrichten oder Pfadberechnungselement-Kommunikationsprotokoll- bzw. PCEP-Nachrichten sind, wobei die besagten Verbindungszustands-Benachrichtigungsmeldungen (FAIL1) von einem Knoten, welcher eine kritische Zustandsänderung (2.2) des besagten Netzwerks erkennt, an einen registrierten Knoten (2.1), welcher für den Empfang der besagten Verbindungszustands-Benachrichtigungsmeidungen (FAIL1) vorgesehen ist, gesendet werden, um die besagte kritische Zustandsänderung (2.2) zu melden, umfassend das Senden einer Kopie (COPY1) der besagten Nachrichten an die besagten Pfadberechnungsentitäten (3.1 - 3.4) zur Aktualisierung der verkehrstechnischen Datenbank (TED).

2. Verfahren nach Anspruch 1, **dadurch gekennzeichnet, dass** das besagte Routing-Protokoll ein Open Shortest Path First bzw. OSPF-Routing-Protokoll ist.

3. Verfahren nach Anspruch 1, **gekennzeichnet durch** das Senden der besagten zweiten Verbindungszustandsinformationen im Fall eines Netzwerkereignisses, insbesondere eines erkannten Netzwerkelementausfalls, eines Nutzungsverhältnisses von Netzwerkressourcen auf der Basis der Grenzwerterkennung, und/oder im Fall eines erkannten Verbindungsfehlers.

4. Verfahren nach Anspruch 1, **gekennzeichnet durch** das Senden der besagten zweiten Verbindungszustandsinformationen, wenn eine bestimmte Verbindung ein jeweiliges vordefiniertes Füllvolumen erreicht.

5. Netzwerkelement (2.1 - 2.4) zur Verwendung in einem Datennetzwerk (1), welches einen geschalteten Netzwerkpfad zwischen mindestens einem jeweiligen Eingangsnetzwerkelement (2.1) und einem jeweiligen Ausgangsnetzwerkelement (2.3) einschließt, wobei das Netzwerkelement (2.1 - 2.4) mindestens ein Pfadberechnungselement (3.1 - 3.4), PCE, umfasst, umfassend:
- Mittel (3a; 3a') zum regelmäßigen Empfangen von ersten Verbindungszustandsinformationen von Entitäten (2.1 - 2.4) des Datennetzwerks (1);
- Mittel (3b) zum Speichern der besagten ersten Verbindungszustandsinformationen in einer verkehrstechnischen Datenbank (TED);
- Mittel (3c) zum Berechnen eines Netzwerkpfads auf der Basis der besagten ersten Verbindungszustandsinformationen; und
- Mittel (3a; 3a") zum Empfangen von zweiten Verbindungszustandsinformationen von Entitäten (2.1 - 2.4, 3.1 - 3.4) des Datennetzwerks (1) auf einer Ad-hoc-Basis, wobei die besagten Mittel (3c) zum Berechnen eines Netzwerkpfads für die Berechnung des besagten Netzwerkpfads unter Einbeziehen der besagten zweiten Verbindungszustandsinformationen ausgelegt sind;
wobei das besagte Netzwerkelement (2.1 - 2.4) weiterhin umfasst:
- Mittel (2b) zum Erzeugen einer Benachrichtigungsmeldung (FAIL1), welche eine verkehrstechnische Ressourcenreservierungsprotokoll- bzw. RSVP-TE-Nachricht oder eine Pfadberechnungselement-Kommunikationsprotokoll- bzw. PCEP-Nachricht ist, um zumindest ein registriertes Netzwerkelement (2.1), welches für den Empfang der besagten Benachrichtigungsmeldung (FAIL1) vorgesehen ist, im Fall eines Netzwerkereignisses, insbesondere eines erkannten Netzwerkelementausfalls, eines Nutzungsverhäitnisses von Netzwerkressourcen auf der Basis der Grenzwerterkennung, und/oder im Fall eines erkannten Verbindungsfehlers zu informieren;
- Mittel (2c) zum Senden einer Kopie (COPY1) der besagten Benachrichtigungsmeldung an die besagte mindestens eine PCE zur Aktualisierung der verkehrstechnischen Datenbank (TED).

6. Datennetzwerk (1), umfassend mindestens zwei Netzwerkelemente (2.1 - 2.4) gemäß Anspruch 5.

## Revendications

1. Procédé d'établissement d'un chemin de réseau entre des noeuds (2.1 à 2.4) dans un réseau de données (1) impliquant le calcul dudit chemin de réseau à partir d'informations d'état de liaison contenues dans une base de données d'ingénierie de trafic (TED), dans lequel ladite base de données d'ingénierie de trafic stocke des premières informations d'état de liaison fournies régulièrement conformément à un protocole de routage utilisé par ledit réseau de données, **caractérisé en ce qu'**il fournit plusieurs éléments de calcul de chemin (3.1 à 3.4) dudit réseau de données, qui sont utilisés pour calculer ledit chemin de réseau, avec des deuxièmes informations d'état de liaison envoyées entre des pairs de noeuds (2.1 à 2.4) dans le réseau de données de manière appropriée, en utilisant lesdites premières et deuxièmes informations d'état de liaison pour calculer ledit chemin de réseau à établir, et **en ce qu'**il fournit lesdites deuxièmes informations d'état de liaison sous la forme de messages de notification d'état de liaison (FAIL1) qui sont des messages de protocole de réservation de ressources-ingénierie de trafic, RSVP-TE, ou des messages de protocole de communication d'élément de calcul de chemin, PCEP, lesdits messages de notification d'état de liaison (FAIL1) étant envoyés à partir d'un noeud détectant une modification d'état critique (2.2) dudit réseau à un noeud enregistré (2.1) désigné pour recevoir lesdits messages de notification d'état de (FAIL1) pour la notification de ladite modification d'état critique (2.2), comprenant l'envoi d'une copie (COPY1) desdits messages auxdites entités de calcul de chemin (3.1 à 3.4) pour mettre à jour la base de données d'ingénierie de trafic (TED).

2. Procédé selon la revendication 1, **caractérisé en ce que** ledit protocole de routage est un protocole de routage OSPF.

3. Procédé selon la revendication 1, **caractérisé par** l'envoi desdites deuxièmes informations d'état de liaison en cas d'un événement de réseau, en particulier une défaillance d'élément de réseau détectée, d'un rapport d'utilisation de ressources de réseau sur la base d'une détection de seuil, et/ou en cas d'une défaillance de liaison détectée.

4. Procédé selon la revendication 1, **caractérisé en ce qu'**il envoie lesdites deuxièmes informations d'état de liaison au cas où une liaison particulière atteint une capacité de remplissage prédéfinie respective.

5. Élément de réseau (2.1 à 2.4) destiné à être utilisé dans un réseau de données (1) comprenant un chemin de réseau commuté entre au moins un élément de réseau d'entrée respectif (2.1) et un élément de réseau de sortie respectif (2.3), l'élément de réseau (2.1 à 2.4) comprenant au moins un élément de calcul de chemin (3.1 à 3.4), PCE, comprenant :
- des moyens (3a ; 3a') pour recevoir les premières informations d'état de liaison à partir des entités (2.1 à 2.4) du réseau de données (1) de manière régulière;
- des moyens (3b) pour stocker lesdites premières informations d'état de liaison dans une base de données d'ingénierie de trafic (TED) ;
- des moyens (3c) pour calculer un chemin de réseau sur la base desdites premières informations d'état de liaison ; et
- des moyens (3a ; 3a") pour recevoir des deuxièmes informations d'état de liaison à partir d'entités (2.1 à 2.4 ; 3.1 à 3.4) du réseau de données (1) de manière appropriée, dans lequel lesdits moyens (3c) pour calculer un chemin de réseau sont adaptés pour calculer ledit chemin de réseau en incluant lesdites deuxièmes informations d'état de liaison ;
ledit élément de réseau (2.1 à 2.4) comprenant en outre :
- des moyens (2b) pour générer un message de notification (FAIL1) qui sont un message de protocole de réservation de ressources-ingénierie de trafic, RSVP-TE, ou un message de protocole de communication d'élément de calcul de chemin, PCEP, pour informer au moins un élément de réseau enregistré (2.1) désigné pour recevoir ledit message de notification (FAIL1) en cas d'un événement de réseau, en particulier une défaillance d'élément de réseau détectée, d'un rapport d'utilisation de ressources de réseau sur la base d'une détection de seuil, et/ou d'une défaillance de liaison détectée ;
- des moyens (2c) pour envoyer une copie (COPY1) dudit message de notification audit au moins un PCE pour mettre à jour la base de données d'ingénierie de trafic (TED).

6. Réseau de données (1) comprenant au moins deux éléments de réseau (2.1 à 2.4) selon la revendication 5.
